# EUROPÄISCHE PATENTSCHRIFT

(11) **EP 2 837 980 B1**
(45) Veröffentlichungstag und Bekanntmachung des Hinweises auf die Patenterteilung: **21.02.2018**
(21) Anmeldenummer: 13180745.5
(22) Anmeldetag: 16.08.2013
(51) Int. Cl.: E06B 9/322, G05B 19/404, E06B 9/68

(54) **Steuervorrichtung**
Control device
Dispositif de commande

(43) Veröffentlichungstag der Anmeldung: 18.02.2015
(73) Patentinhaber: Elsner Elektronik GmbH, 75391 Gechingen (DE)
(72) Erfinder: Prechtl, Philipp, 70195 Stuttgart (DE)
(74) Vertreter: Daub, Thomas

(56) Entgegenhaltungen:
- EP-A2- 1 199 619
- EP-A2- 1 281 833

## Beschreibung

### Stand der Technik

Die Erfindung betrifft eine Steuervorrichtung nach dem Oberbegriff des Anspruchs 1.

Es ist bereits eine Steuervorrichtung für eine Jalousie mit einem Elektromotor vorgeschlagen worden, bei welcher eine Anlauftotzeit des Elektromotors durch eine Eingabe eines festen Zeitwerts kompensierbar ist. Eine Detektion oder Bestimmung der Anlauftotzeit des Elektromotors erfolgt jedoch nicht. EP 1 281 833 A2 beschreibt eine Positionsansteuerung von Jalousieantrieben, die es erlaubt, das Betriebsverhalten eines mit Schlupf behafteten Antriebs für Jalousien zu ermitteln und die ermittelten Werte einer Steuereinrichtung zur Verfügung zu stellen, sodass ohne aufwendige und teuere Sensoren ein Anfahren von beliebigen Positionen des Antriebs reproduzierbar und unabhängig von der jeweiligen Bewegungsrichtung anfahrbar ist. Die Aufgabe der Erfindung besteht insbesondere darin, eine gattungsgemäße Steuervorrichtung mit vorteilhaften Eigenschaften hinsichtlich einer Bestimmung einer Anlauftotzeit eines Elektromotors bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Steuervorrichtung für zumindest einen Sicht- und/oder Sonnenschutz und/oder für zumindest ein Fenster, mit zumindest einer Aktoreinheit zur Ansteuerung zumindest eines Elektromotors, welcher zu einem Heben und/oder Senken des zumindest einen Sicht- und/oder Sonnenschutzes und/oder zu einem Öffnen und/oder Schließen des zumindest einen Fensters vorgesehen ist.

Es wird vorgeschlagen, dass die zumindest eine Aktoreinheit dazu vorgesehen ist, eine Anlauftotzeit des zumindest einen Elektromotors zumindest im Wesentlichen automatisch zu bestimmen.

Unter einem "Sicht- und/oder Sonnenschutz" soll in diesem Zusammenhang insbesondere ein, insbesondere verstellbarer, Sicht- und/oder Sonnenschutz verstanden werden, welcher dazu vorgesehen ist, insbesondere eine Fläche und/oder einen Raum gegenüber Blicken und/oder einfallendem Licht, insbesondere Sonnenlicht, teilweise und/oder zumindest im Wesentlichen vollständig abzuschirmen. Unter "vorgesehen" soll insbesondere speziell programmiert, ausgelegt und/oder ausgestattet verstanden werden. Vorzugsweise ist das zumindest eine "Fenster" als Kipp- und/oder Schwenk- und/oder Schiebefenster ausgebildet. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt. Unter einer "Aktoreinheit" soll in diesem Zusammenhang insbesondere eine Einheit verstanden werden, welche dazu vorgesehen ist, zumindest ein, insbesondere elektrisches, Signal insbesondere in zumindest einen Fahrbefehl für den zumindest einen Elektromotor umzuwandeln. Insbesondere ist das zumindest eine Signal von zumindest einer an die Steuervorrichtung angeschlossenen und/oder zumindest teilweise in die Steuervorrichtung integrierten Bedieneinheit erzeugbar. Insbesondere ist das zumindest eine Signal durch eine manuelle Bedienung der zumindest einen Bedieneinheit und/oder zumindest teilweise automatisiert, beispielsweise durch eine Zeitschaltung, erzeugbar. Unter einem "Fahrbefehl" soll in diesem Zusammenhang insbesondere ein an den zumindest einen Elektromotor gerichteter Befehl verstanden werden, welcher insbesondere zumindest eine Information über eine Arbeitsrichtung und/oder eine Arbeitsdauer und/oder eine Arbeitsgeschwindigkeit des zumindest einen Elektromotors enthält. Insbesondere wird durch den zumindest einen Fahrbefehl, insbesondere unmittelbar, eine Bestromung des zumindest einen Elektromotors initiiert. Unter einem "Elektromotor" soll in diesem Zusammenhang insbesondere ein Motor verstanden werden, welcher elektrische Energie in eine, insbesondere rotierende, Bewegung umsetzt. Insbesondere ist der zumindest eine Elektromotor mit dem zumindest einen Sicht- und/oder Sonnenschutz und/oder mit dem zumindest einen Fenster kraft- und/oder formschlüssig verbunden. Unter "kraft- und/oder formschlüssig verbunden" soll dabei insbesondere eine lösbare und/oder unlösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Der zumindest eine Elektromotor kann beispielsweise als Gleichstrommotor und/oder Wechselstrommotor und/oder Drehstrommotor ausgebildet sein. Unter einer "Anlauftotzeit" soll in diesem Zusammenhang insbesondere eine Zeitspanne zwischen einem Zeitpunkt eines Erzeugens eines Fahrbefehls und einem Zeitpunkt eines Einsetzens einer Bewegung des zumindest einen Elektromotors verstanden werden.

Darunter, dass die zumindest eine Aktoreinheit dazu vorgesehen ist, die Anlauftotzeit des zumindest einen Elektromotors "zumindest im Wesentlichen automatisch zu bestimmen", soll in diesem Zusammenhang insbesondere verstanden werden, dass die zumindest eine Aktoreinheit, insbesondere während einer Ausführung eines Fahrbefehls durch den zumindest einen Elektromotor, zumindest einen die Anlauftotzeit des zumindest einen Elektromotors repräsentierenden Messwert erfasst und/oder auswertet. Insbesondere erfolgt eine Bestimmung und/oder Auswertung zumindest eines die Anlauftotzeit des zumindest einen Elektromotors repräsentierenden Messwerts zumindest teilweise und oder vorzugsweise vollständig unabhängig von einem Bediener und/oder einer Bedienereingabe. Vorzugsweise umfasst die Steuervorrichtung zumindest eine Regeleinheit, welche insbesondere der zumindest einen Aktoreinheit zugeordnet und/oder zumindest teilweise in die zumindest eine Aktoreinheit integriert ist. Unter einer "Regeleinheit" soll insbesondere eine Einheit mit zumindest einer Regelelektronik verstanden werden. Unter einer "Regelelektronik" soll insbesondere eine Einheit mit einer Prozessoreinheit und mit einer Speichereinheit sowie mit einem in der Speichereinheit gespeicherten Betriebsprogramm verstanden werden.

Durch die erfindungsgemäße Ausgestaltung kann eine Steuervorrichtung mit verbesserten Eigenschaften hinsichtlich einer Bestimmung einer Anlauftotzeit zumindest eines Elektromotors zu einem Heben und/oder Senken eines Sicht- und/oder Sonnenschutzes und/oder zu einem Öffnen und/oder Schließen eines Fensters bereitgestellt werden. Insbesondere kann eine vorteilhaft automatische Erfassung der Anlauftotzeit des zumindest eines Elektromotors erreicht werden. Ferner kann durch die automatische Bestimmung der Anlauftotzeit auf vorteilhaft einfache Weise eine automatische Kompensation der Anlauftotzeit des zumindest einen Elektromotors ermöglicht werden. Hierdurch kann ein vorteilhaft einfacher und/oder zuverlässiger Betrieb der Steuervorrichtung mit verschiedenen Elektromotortypen, insbesondere mit verschiedenen Anlauftotzeiten, ermöglicht werden. Insbesondere kann hierdurch ein vorteilhaft einfacher und/oder schneller Austausch des zumindest einen Elektromotors ermöglicht werden. Ferner kann ein vorteilhaft unkomplizierter Betrieb von Elektromotoren mit unbekannter Anlauftotzeit ermöglicht werden. Des Weiteren kann eine vorteilhaft einfache Bedienung der erfindungsgemäßen Steuervorrichtung erreicht werden, insbesondere da eine manuelle Eingabe eines Zeitwerts für eine Anlauftotzeit entfällt.

Überdies kann eine vorteilhaft genaue Positionierung des zumindest einen Sicht- und/oder Sonnenschutzes und/oder des zumindest einen Fensters erreicht werden.

Des Weiteren wird vorgeschlagen, dass die zumindest eine Aktoreinheit dazu vorgesehen ist, einen Beginn und/oder ein Ende der Anlauftotzeit zu detektieren. Insbesondere ist die zumindest eine Aktoreinheit dazu vorgesehen, einen Beginn und/oder ein Ende der Anlauftotzeit anhand von zumindest einer Signalpegeländerung und/oder anhand zumindest einer steigenden und/oder fallenden Signalflanke zu erfassen. Vorzugsweise erfolgt eine Detektion eines Beginns und/oder eines Endes der Anlauftotzeit zumindest teilweise durch eine Regeleinheit der zumindest eine Aktoreinheit. Insbesondere erfolgt eine Detektion eines Beginns und/oder eines Endes der Anlauftotzeit zumindest teilweise durch eine separate Elektronikbaugruppe der Regeleinheit, beispielsweise eine Schmitt-Trigger-Baugruppe, und/oder zumindest teilweise durch eine innerhalb eines Betriebsprogramms der Regeleinheit integrierte Softwarefunktion. Hierdurch kann auf vorteilhaft einfache Weise ein Beginn und/oder ein Ende der Anlauftotzeit erfasst werden. Ferner kann vorteilhaft ein Startpunkt und/oder ein Endpunkt für eine Zeitmessung ermittelt und/oder zu einer Weiterverarbeitung zur Verfügung gestellt werden.

Vorteilhaft ist die zumindest eine Aktoreinheit dazu vorgesehen, eine Zeitdauer der zumindest einen Anlauftotzeit zu ermitteln. Insbesondere ist die zumindest eine Aktoreinheit dazu vorgesehen, eine Zeitdauer zwischen einem Zeitpunkt einer Erzeugung eines Fahrbefehls und einem Zeitpunkt eines Einsetzens einer Bewegung des zumindest einen Elektromotors zu messen. Vorzugsweise erfolgt eine Ermittlung der Zeitdauer der zumindest einen Anlauftotzeit zumindest teilweise durch eine Regeleinheit der zumindest einen Aktoreinheit. Insbesondere erfolgt eine Ermittlung der Zeitdauer der zumindest einen Anlauftotzeit zumindest teilweise durch eine separate Elektronikbaugruppe der Regeleinheit, beispielsweise eine Zählerbaugruppe, und/oder zumindest teilweise durch eine innerhalb eines Betriebsprogramms der Regeleinheit integrierte Softwarefunktion. Hierdurch kann eine vorteilhaft exakte und/oder bedienerunabhängige Ermittlung der Zeitdauer der Anlauftotzeit erreicht werden. Ferner kann anhand der ermittelten Zeitdauer eine vorteilhaft einfache und/oder genaue Kompensation der Anlauftotzeit und somit eine vorteilhaft exakte Positionierung des zumindest einen Sicht- und/oder Sonnenschutzes und/oder des zumindest einen Fensters erfolgen.

In einer bevorzugten Ausgestaltung der Erfindung wird vorgeschlagen, dass die zumindest eine Aktoreinheit eine Sensoreinheit umfasst, welche dazu vorgesehen ist, in zumindest einem Betriebszustand einen Verlauf eines Motorstroms des zumindest einen Elektromotors zu erfassen. Unter einer "Sensoreinheit" soll in diesem Zusammenhang insbesondere eine Einheit verstanden werden, welche dazu vorgesehen ist, insbesondere physikalische und/oder chemische Eigenschaften und/oder eine stoffliche Beschaffenheit ihrer Umgebung qualitativ und/oder als Messgröße quantitativ zu erfassen. Insbesondere ist die Sensoreinheit dazu vorgesehen, direkt und/oder indirekt, einen Verlauf eines Motorstroms zu erfassen. Insbesondere erfasst die Sensoreinheit den Verlauf des Motorstroms wert- und/oder zeitkontinuierlich und/oder wert- und/oder zeitdiskret. Unter einem "Motorstrom" soll in diesem Fall insbesondere ein elektrischer Strom verstanden werden, welcher insbesondere zwischen einem Zeitpunkt einer Erzeugung eines Fahrbefehls und einer vollständigen Ausführung des Fahrbefehls durch den zumindest einen Elektromotor fließt und diesen mit elektrischer Energie versorgt. Insbesondere weist der Motorstrom des zumindest einen Elektromotors während der Anlauftotzeit des zumindest einen Elektromotors eine geringere Stromstärke und/oder Stromamplitude auf als während einer Laufzeit des zumindest eine Elektromotors. Unter einer "Laufzeit" soll in diesem Zusammenhang insbesondere eine Zeitspanne verstanden werden, während welcher der zumindest eine Elektromotor eine ihm, insbesondere in Form eines Motorstroms, zugeführte elektrische Energie in eine Bewegung umsetzt. Hierdurch kann vorteilhaft einfach eine Datenbasis zur Ermittlung einer Laufzeit und/oder Anlauftotzeit des zumindest einen Elektromotors erzeugt und/oder zu einer Weiterverarbeitung bereitgestellt werden.

Ferner wird vorgeschlagen, dass die Aktoreinheit dazu vorgesehen ist, die Zeitdauer der Anlauftotzeit und/oder den Beginn und/oder das Ende der zumindest einen Anlauftotzeit anhand zumindest einer Änderung innerhalb des Verlaufs des Motorstroms zu ermitteln. Unter einer "Änderung" innerhalb des Verlaufs des Motorstroms soll in diesem Zusammenhang insbesondere eine Pegeländerung und/oder eine Amplitudenänderung innerhalb des Verlaufs des Motorstroms verstanden werden. Insbesondere detektiert die zumindest eine Aktoreinheit die zumindest eine Änderung innerhalb des Verlaufs des Motorstroms. Vorzugsweise erfolgt eine Ermittlung der Zeitdauer der Anlauftotzeit und/oder des Beginns und/oder des Endes der Anlauftotzeit anhand von Änderungen innerhalb des Verlaufs des Motorstroms zumindest teilweise durch eine Regeleinheit der zumindest einen Aktoreinheit. Insbesondere erfolgt eine Ermittlung der Zeitdauer der einen Anlauftotzeit und/oder des Beginns und/oder des Endes der zumindest einen Anlauftotzeit anhand von Änderungen innerhalb des Verlaufs des Motorstroms zumindest teilweise durch eine separate Elektronikbaugruppe der Regeleinheit und/oder zumindest teilweise durch eine innerhalb eines Betriebsprogramms der Regeleinheit integrierte Softwarefunktion. Beispielsweise kann eine Erkennung von Änderungen innerhalb des Verlaufs des Motorstroms über einen Schwellwertschalter erfolgen, welcher dazu vorgesehen ist, bei einem Überschreiten und/oder Unterschreiten eines festgelegten Schwellwerts ein Start- und/oder Stoppsignal für eine Zeitmessung zu erzeugen. Die Zeitmessung kann beispielsweise mittels zumindest einer Zählerschaltung erfolgen, welche mit einem festen Arbeitstakt betrieben wird. Insbesondere kann die zumindest eine Zählerschaltung als separate Elektronikbaugruppe und/oder zumindest teilweise als eine innerhalb eines Betriebsprogramms einer Regeleinheit der zumindest einen Aktoreinheit integrierte Softwarefunktion ausgebildet sein. Hierdurch können vorteilhaft einfach und/oder exakt die Zeitdauer der Anlauftotzeit und/oder der Beginn und/oder das Ende der zumindest einen Anlauftotzeit aus dem Verlauf des Motorstroms abgleitet werden.

In einer weiteren bevorzugten Ausgestaltung der Erfindung wird vorgeschlagen, dass die zumindest eine Aktoreinheit dazu vorgesehen ist, eine Zeitspanne zwischen einem Auslösen eines Fahrbefehls an den zumindest einen Elektromotor und einer zumindest im Wesentlichen vollständigen Ausführung des Fahrbefehls durch den zumindest einen Elektromotor zu erfassen. Insbesondere startet eine Zeitmessung mit Erzeugung eines Fahrbefehls durch die Aktoreinheit und stoppt mit einem Erreichen der gewünschten Position durch den zumindest einen Sicht- und/oder Sonnenschutz und/oder durch das zumindest eine Fenster, welche aufgrund der Bewegung des zumindest einen Elektromotors angefahren wird. Hierdurch kann auf vorteilhaft einfache und/oder schnelle Weise eine Datengrundlage zu einer Ermittlung einer Laufzeit des zumindest einen Elektromotors und/oder zu einer Positionsbestimmung und/oder zu einer exakten Positionierung des zumindest einen Sicht- und/oder Sonnenschutzes und/oder des zumindest einen Fensters erreicht werden.

Überdies wird vorgeschlagen, dass die zumindest eine Aktoreinheit dazu vorgesehen ist, aus der Zeitspanne und der Anlauftotzeit des zumindest einen Elektromotors eine Laufzeit des zumindest einen Elektromotors zu ermitteln. Insbesondere weist die zumindest eine Aktoreinheit hierzu zumindest eine Auswerteeinheit auf, welche dazu vorgesehen ist, insbesondere durch eine Subtraktion der Anlauftotzeit von der Zeitspanne zwischen einem Auslösen eines Fahrbefehls an den zumindest einen Elektromotor und einer zumindest im Wesentlichen vollständigen Ausführung des Fahrbefehls die Laufzeit des zumindest einen Elektromotors zu berechnen. Alternativ ist es denkbar, dass eine Ermittlung der Laufzeit derart erfolgt, dass eine Messung der Laufzeit erst nach einem Ablauf einer zuvor ermittelten Anlauftotzeit durchgeführt wird. Hierdurch können vorteilhaft Einflüsse der Anlauftotzeit, welche zu einem Fehler bei einer Ermittlungen der Laufzeit des zumindest einen Elektromotors führen könnten, vollständig oder zumindest teilweise ausgeschlossen werden.

Vorteilhaft ist die zumindest eine Aktoreinheit dazu vorgesehen, anhand der Laufzeit des zumindest einen Elektromotors eine Position des zumindest einen Sicht- und/oder Sonnenschutzes und/oder des zumindest einen Fensters zu bestimmen. Insbesondere weist die zumindest eine Aktoreinheit hierzu zumindest eine Auswerteeinheit auf, welche dazu vorgesehen ist, insbesondere ausgehend von einer bekannten Position des zumindest einen Sicht- und/oder Sonnenschutzes und/oder des zumindest einen Fensters und anhand eines bekannten Zusammenhangs zwischen der Laufzeit des zumindest einen Elektromotors und einer daraus resultierenden Bewegungsrichtung und/oder Bewegungsdistanz des zumindest einen Sicht- und/oder Sonnenschutzes und/oder des zumindest einen Fensters eine Position zu bestimmen, welche der zumindest eine Sicht- und/oder Sonnenschutz und/oder das zumindest eine Fenster nach einer zumindest im Wesentlichen vollständigen Ausführung eines Fahrbefehls durch den zumindest einen Elektromotor einnimmt. Hierdurch kann eine vorteilhaft exakte Positionsbestimmung und/oder ein vorteilhaft exaktes Anfahren einer gewünschten Position des zumindest einen Sicht- und/oder Sonnenschutzes und/oder des zumindest einen Fensters erreicht werden.

Ferner wird ein System mit zumindest einem Sicht- und/oder Sonnenschutz und/oder mit zumindest einem Fenster, zumindest einem Elektromotor, welcher zu einem Heben und/oder Senken des zumindest einen Sicht- und/oder Sonnenschutzes und/oder zu einem Öffnen und/oder Schließen des zumindest einen Fensters vorgesehen ist, und zumindest einer Steuervorrichtung vorgeschlagen. Insbesondere ist die zumindest eine Steuervorrichtung über eine direkte, insbesondere elektrische, Verbindung und/oder über ein Bussystem mit dem zumindest einen Elektromotor verbunden. Durch ein derartiges System kann eine vorteilhaft einfache Steuerung und/oder Bedienung des zumindest einen Sicht- und/oder Sonnenschutzes und/oder des zumindest einen Fensters ermöglicht werden.

Des Weiteren wird ein Verfahren zum Betrieb einer Steuervorrichtung für zumindest einen Sicht- und/oder Sonnenschutz und/oder für zumindest ein Fenster, mit zumindest einer Aktoreinheit zur Ansteuerung zumindest eines Elektromotors, welcher zu einem Verfahren des zumindest einen Sicht- und/oder Sonnenschutzes und/oder zu einem Öffnen des zumindest einen Fensters vorgesehen ist, vorgeschlagen, wobei eine Anlauftotzeit des zumindest einen Elektromotors automatisch bestimmt wird. Hierdurch kann eine vorteilhaft unkomplizierte Verwendung verschiedener Elektromotortypen, insbesondere mit verschiedenen und/oder unbekannten Anlauftotzeiten, ermöglicht werden. Ferner kann eine vorteilhaft genaue Positionierung des zumindest einen Sicht- und/oder Sonnenschutzes und/oder des zumindest einen Fensters erreicht werden.

Die erfindungsgemäße Steuervorrichtung soll hierbei nicht auf die oben beschriebene Anwendung und Ausführungsform beschränkt sein. Insbesondere kann die erfindungsgemäße Steuervorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System mit einer erfindungsgemäßen Steuervorrichtung und mit einem Elektromotor,
- Fig. 2: einen Motorstromverlauf eines Wechselstrommotors,
- Fig. 3: einen Motorstromverlauf eines Gleichstrommotors und
- Fig. 4: ein Bussystem mit einer alternativen erfindungsgemäßen Steuervorrichtung und mit einem Elektromotor.

### Beschreibung der Ausführungsbeispiele

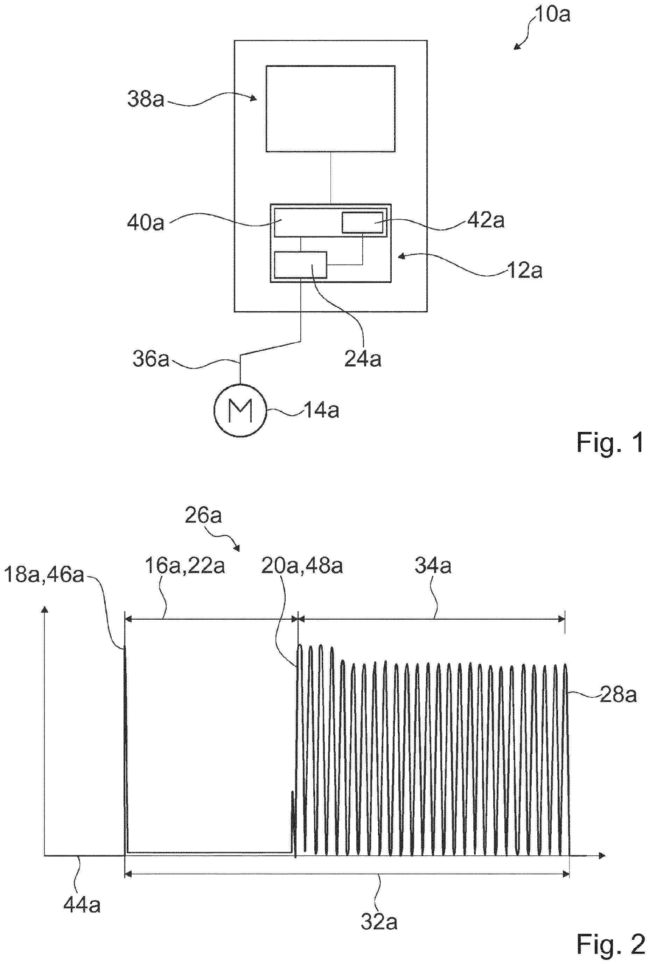

Fig. 1 zeigt eine erfindungsgemäße Steuervorrichtung 10a mit einer Aktoreinheit 12a. Die Aktoreinheit 12a ist über eine elektrisch leitende Verbindung 36a mit einem Elektromotor 14a verbunden. Die Aktoreinheit 12a ist dazu vorgesehen, den Elektromotor 14a anzusteuern. Der Elektromotor 14a ist dazu vorgesehen, einen hier nicht gezeigten Sicht- und/oder Sonnenschutz zu heben und/oder zu senken und/oder ein hier nicht gezeigtes Fenster zu öffnen und/oder zu schließen. Der Elektromotor 14a kann sowohl als Gleichstrommotor als auch als Wechselstrommotor ausgebildet sein. Der Sicht- und/oder Sonnenschutz kann beispielsweise als Jalousie, als Rollladen und/oder als Markise ausgebildet sein während das Fenster beispielsweise als Kipp- und/oder Schwenk- und/oder Schiebefenster ausgebildet sein kann. Ferner weist die Steuervorrichtung 10a eine Bedieneinheit 38a auf. Über die Bedieneinheit 38a ist es einem Bediener der Steuervorrichtung 10a möglich manuell ein Heben- und/oder ein Senken des Sicht- und/oder Sonnenschutzes und/oder ein Öffnen und/oder Schließen des Fensters zu initiieren. Ferner kann die Bedieneinheit 38a auch Mittel zur Visualisierung von Informationen, beispielsweise ein LC-Display, für den Bediener der Steuereinrichtung umfassen. Neben der Bedieneinheit 38a und/oder alternativ zur Bedieneinheit 38 wäre es denkbar, dass eine Steuereinheit ein Mittel zur automatischen Auslösung eines Hebens und/oder Senkens des Sicht- und/oder Sonnenschutzes und/oder eines Öffnens und/oder Schließens des Fensters aufweist. Dies könnte beispielsweise eine Zeitschaltuhr sein, welche zu festgelegten Tageszeiten ein Heben und/oder Senken des Sicht- und/oder Sonnenschutzes und/oder ein Öffnen und/oder Schließen des Fensters initiiert.

Eine Eingabe über die Bedieneinheit 38a zum Auslösen eines Hebens und/oder Senkens des Sicht- und/oder Sonnenschutzes und/oder zum Auslösen eines Öffnens und/oder Schließens des Fensters wird an eine Regeleinheit 40a der Aktoreinheit 12a übergeben. Die Regeleinheit 40a wandelt die Eingabe, welche über die Bedieneinheit 38a getätigt wurde, in einen Fahrbefehl für den Elektromotor 14a um. Der Fahrbefehl wird über die elektrische Verbindung 36a zu dem Elektromotor 14a übertragen. Mit Erzeugung des Fahrbefehls beginnt zeitgleich eine Bestromung des Elektromotors 16a. Eine Sensoreinheit 24a erfasst während der Ausführung eines Fahrbefehls einen Verlauf 26a eines Motorstroms 28a des Elektromotors 14a. Zur Erfassung des Verlaufs 26a des Motorstroms 28a weist die Sensoreinheit 24a zumindest einen nicht dargestellten Stromsensor auf. Der Stromsensor kann beispielsweise als Shunt oder als Stromwandler ausgebildet sein. Zur Auswertung wir der erfasste Stromverlauf in analoger und/oder digitalisierter Form an eine Auswerteeinheit 42a der Aktoreinheit 12a übergeben. Die Regeleinheit 40a und die Auswerteeinheit 42a sind als eine bauliche Einheit, beispielsweise als ein Mikrocontroller, ausgeführt. Alternativ ist es jedoch auch denkbar, eine Regeleinheit und eine Auswerteeinheit als voneinander getrennte bauliche Einheiten auszubilden.

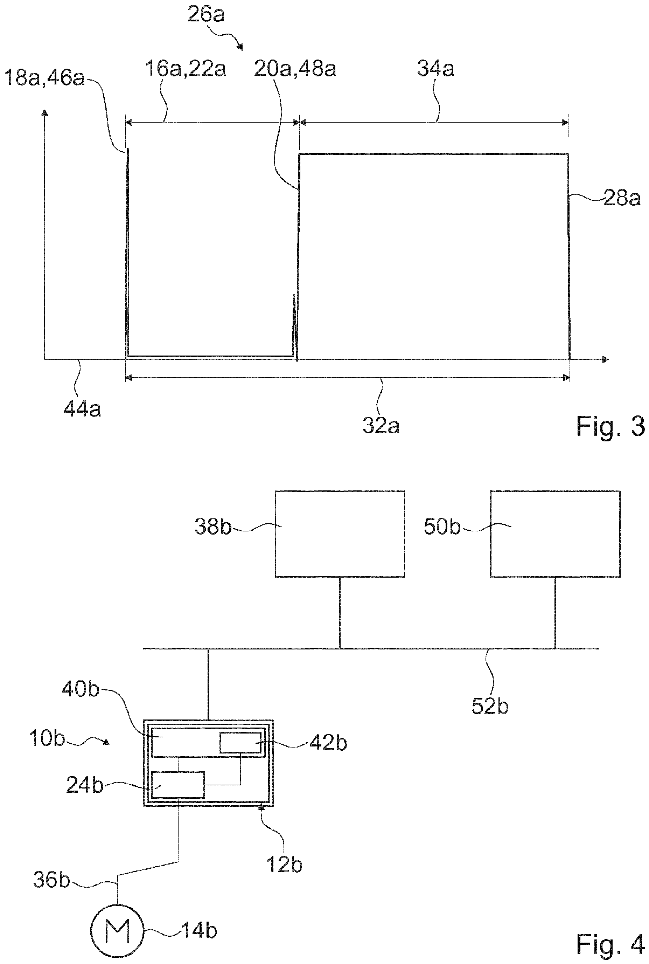

Die Figuren 2 und 3 zeigen jeweils ein Beispiel für einen möglichen Verlauf 26a eines Motorstroms 28a. Während die Figur 2 einen Verlauf 26a eines Motorstroms 28a eines Wechselstrommotors zeigt, zeigt die Figur 3 einen Verlauf 26a eines Motorstroms 28a eines Gleichstrommotors. In den Figuren 2 und 3 ist der Verlauf 26a des Motorstroms 28a jeweils für eine Zeitspanne 32a zwischen dem Auslösen eines Fahrbefehls für den Elektromotor 14a und einer vollständigen Ausführung des Fahrbefehls durch den Elektromotor 14a über eine Zeitachse 44a aufgetragen. Der Verlauf 26a des Motorstroms 28a zeigt während der Ausführung eines Fahrbefehls charakteristische Merkmale. Mit Auslösen des Fahrbefehls tritt zunächst ein durch Ladevorgänge innerhalb einer Motorelektronik hervorgerufener kurzer Stromimpuls 46a auf. Auf den Stromimpuls 46a folgt die Anlauftotzeit 16a des Elektromotors 14a. Während der Anlauftotzeit 16a weist der Elektromotor 14a nur eine geringe Stromaufnahme auf. Die während der Anlauftotzeit 16a aufgenommene elektrische Energie wird durch den Elektromotor 14a nicht in eine Bewegung des Elektromotors 14a umgesetzt. Auf die Anlauftotzeit 16a folgt die Laufzeit 34a des Elektromotors 14a, während welcher der Elektromotor 14a gegenüber der Anlauftotzeit 16a eine deutlich höhere Stromaufnahme aufweist. Während der Laufzeit 34a wird die vom Elektromotor 14a aufgenommene elektrische Energie in eine Bewegung des Elektromotors 14a umgesetzt. Nach einer vollständigen Ausführung des Fahrbefehls durch den Elektromotor 14a erfolgt keine Stromaufnahme durch den Elektromotor 14a mehr. Wird durch den Fahrbefehl eine Endposition des Sicht- und/oder Sonnenschutzes und/oder des Fensters angefahren, so wird eine Versorgung des Elektromotors mit elektrischer Energie bei einem Erreichen der Endposition durch den Sicht- und/oder Sonnenschutz und/oder durch das Fenster mittels eines Endschalters beendet. Wird durch den Fahrbefehl eine Position des Sicht- und/oder Sonnenschutzes und/oder des Fensters angefahren, welche von einer Endposition verschieden ist, so wird die Versorgung des Elektromotors mit elektrischer Energie bei Erreichen der gewünschten Position durch den Sicht- und/oder Sonnenschutz und/oder durch das Fenster durch die Aktoreinheit 12a beendet.

Für eine genaue Positionierung des Sicht- und/oder Sonnenschutzes und/oder des Fensters ist eine exakte Bestimmung der effektiven Laufzeit 34 des Elektromotors 14a notwendig. Zu diesem Zweck wird zunächst die Anlauftotzeit 16a des Elektromotors 14a durch die Aktoreinheit 12a automatisch bestimmt. Dazu werden Änderungen im Verlauf 26a des Motorstroms 28a verwendet. So wird der Beginn 18a der Anlauftotzeit 16a und das Ende 20a der Anlauftotzeit 16a durch die Aktoreinheit 12a detektiert. Der Beginn 18a der Anlauftotzeit 16a ist dabei identisch zu dem Zeitpunkt der Auslösung eines Fahrbefehls. Das Ende 20a der Anlauftotzeit 16a wird durch einen Stromanstieg 48a des Motorstroms 28a zu Beginn der Laufzeit 34a des Elektromotors 14a gekennzeichnet. Der Stromanstieg 48a wird auf eine einem Fachmann bekannte Weise durch die Aktoreinheit 12a erfasst. Zwischen Beginn 18a und Ende 20a der Anlauftotzeit 16a wird die Zeitdauer 22a der Anlauftotzeit 16a durch die Aktoreinheit 12a ermittelt. Dies kann beispielsweise über eine in der Figur 1 nicht dargestellte Zählerschaltung erfolgen, welche in die Aktoreinheit 12a, insbesondere in die Auswerteeinheit 42, integriert oder als Softwarefunktion realisiert sein kann. Die Erfassung der Zeitdauer 22a der Anlauftotzeit 16a wird durch die Erzeugung des Fahrbefehls gestartet und durch die Erfassung des Stromanstiegs 48a gestoppt. Dies ermöglicht eine exakte Ermittlung der Zeitdauer 22a der Anlauftotzeit 16a.

Parallel dazu erfasst die Aktoreinheit 12a ferner die Zeitspanne 32a zwischen dem Auslösen eines Fahrbefehls für den Elektromotor 14a und einer vollständigen Ausführung des Fahrbefehls durch den Elektromotor 14a. Durch eine Subtraktion der Zeitdauer 22a der Anlauftotzeit 16a von der Zeitspanne 32a zwischen dem Auslösen eines Fahrbefehls für den Elektromotor 14a und einer vollständigen Ausführung des Fahrbefehls durch den Elektromotor 14a wird die effektive Laufzeit 34a des Elektromotors 14a durch die Auswerteeinheit 42a der Aktoreinheit 12a ermittelt. Anhand der effektiven Laufzeit 34a des Elektromotors 14a ist die Position des Sicht- und/oder Sonnenschutzes und/oder des Fensters exakt bestimmbar.

Alternativ wäre es denkbar, die effektive Laufzeit 34a des Elektromotors 14a dadurch zu bestimmen, dass eine Erfassung der effektiven Laufzeit 34a durch eine Detektion des Stromanstiegs 48a gestartet und nach vollständiger Ausführung eines Fahrbefehls gestoppt wird. Dies ermöglicht eine Ermittlung der effektiven Laufzeit 34a ohne eine Ermittlung der Zeitdauer 22a der Anlauftotzeit 16a.

In der Figur 4 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figur 4 ist der Buchstabe a durch die Buchstaben b ersetzt.

Die Figur 4 zeigt eine alternative erfindungsgemäße Steuervorrichtung 10b. Die Steuervorrichtung 10b weist eine Aktoreinheit 12b mit einer Regeleinheit 40b, einer Sensoreinheit 24b und einer Auswerteeinheit 42b auf. Die Aktoreinheit 12b ist über eine elektrisch leitende Verbindung 36b mit einem Elektromotor 14b verbunden. Der Elektromotor 14a ist dazu vorgesehen, einen hier nicht gezeigten Sicht- und/oder Sonnenschutz zu heben und/oder zu senken und/oder ein nicht gezeigtes Fenster zu öffnen und/oder zu schließen.

Die Steuervorrichtung 10b ist in ein Bussystem 52b eingebunden. Neben der Steuervorrichtung 10b ist eine Bedieneinheit 38b an das Bussystem 52b angeschlossen. Bedienereingaben, welche an der Bedieneinheit 38b getätigt werden, werden über das Bussystem 52b an die Steuervorrichtung 10b übermittelt. Ferner können weitere Busteilnehmer 50b an das Bussystem 52b angeschlossen sein. Dies können beispielsweise eine Zeitschaltuhr und/oder ein Lichtsensor sein, welche zu festgelegten Tageszeiten und/oder bei einem Einfall von Licht ein Heben- und/oder Senken des Sicht- und/oder Sonnenschutzes und/oder ein Öffnen und/oder Schließen des Fensters automatisch initiieren.

Eine Bestimmung einer Anlauftotzeit 16b des Elektromotors 14b erfolgt entsprechend der Beschreibung zu den Figuren 1 bis 3.

### Bezugszeichen

- 10: Steuervorrichtung
- 12: Aktoreinheit
- 14: Elektromotor
- 16: Anlauftotzeit
- 18: Beginn
- 20: Ende
- 22: Zeitdauer
- 24: Sensoreinheit
- 26: Verlauf
- 28: Motorstrom
- 32: Zeitspanne
- 34: Laufzeit
- 36: Verbindung
- 38: Bedieneinheit
- 40: Regeleinheit
- 42: Auswerteeinheit
- 44: Zeitachse
- 46: Stromimpuls
- 48: Stromanstieg
- 50: Busteilnehmer
- 52: Bussystem

## Patentansprüche

1. Steuervorrichtung für zumindest einen Sicht- und/oder Sonnenschutz und/oder für zumindest ein Fenster, mit zumindest einer Aktoreinheit (12a; 12b) zur Ansteuerung zumindest eines Elektromotors (14a; 14b), welcher zu einem Heben und/oder Senken des zumindest einen Sicht- und/oder Sonnenschutzes und/oder zu einem Öffnen und/oder Schließen des zumindest einen Fensters vorgesehen ist, **dadurch gekennzeichnet, dass** zum Betrieb der Steuervorrichtung die zumindest eine Aktoreinheit (12a; 12b) dazu vorgesehen ist, eine Anlauftotzeit (16a, 16b) des zumindest einen Elektromotors (14a, 14b) unter Verwendung von Änderungen eines Motorstroms (28a; 28b) des Elektromotors (14a, 14b) automatisch zu bestimmen.

2. Steuervorrichtung nach Anspruch 1, **dadurch gekennzeichnet, dass** die zumindest eine Aktoreinheit (12a, 12b) dazu vorgesehen ist, einen Beginn (18a, 18b) und/oder ein Ende (20a, 20b) der Anlauftotzeit (16a, 16b) zu detektieren.

3. Steuervorrichtung nach einem der vorhergehenden Ansprüche, **dadurch gekennzeichnet, dass** die zumindest eine Aktoreinheit (12a; 12b) dazu vorgesehen ist, eine Zeitdauer (22a, 22b) der Anlauftotzeit (16a, 16b) zu ermitteln.

4. Steuervorrichtung nach einem der vorhergehenden Ansprüche, **dadurch gekennzeichnet, dass** die zumindest eine Aktoreinheit (12a, 12b) eine Sensoreinheit (24a; 24b) umfasst, welche dazu vorgesehen ist, in zumindest einem Betriebszustand einen Verlauf (26a; 26b) eines Motorstroms (28a; 28b) des zumindest einen Elektromotors (14a; 14b) zu erfassen.

5. Steuervorrichtung nach Anspruch 4, **dadurch gekennzeichnet, dass** die Aktoreinheit (12a; 12b) dazu vorgesehen ist, die Zeitdauer (22a; 22b) der Anlauftotzeit (16a; 16b) und/oder den Beginn (18a; 18b) und/oder das Ende (20a; 20b) der Anlauftotzeit (16a; 16b) anhand von zumindest einer Änderung innerhalb des Verlaufs (26a, 26b) des Motorstroms (28a; 28b) zu ermitteln.

6. Steuervorrichtung nach einem der vorhergehenden Ansprüche, **dadurch gekennzeichnet, dass** die zumindest eine Aktoreinheit (12a; 12b) dazu vorgesehen ist, eine Zeitspanne (32a; 32b) zwischen einem Auslösen eines Fahrbefehls an den zumindest einen Elektromotor (14a; 14b) und einer zumindest im Wesentlichen vollständigen Ausführung des Fahrbefehls durch den zumindest einen Elektromotor (14a; 14b) zu erfassen.

7. Steuervorrichtung nach Anspruch 6, **dadurch gekennzeichnet, dass** die zumindest eine Aktoreinheit (12a; 12b) dazu vorgesehen ist, aus der Zeitspanne (32a; 32b) und der Anlauftotzeit (16a; 16b) des zumindest einen Elektromotors (14a; 14b) eine Laufzeit (34a; 34b) des zumindest einen Elektromotors (14a; 14b) zu ermitteln.

8. Steuervorrichtung nach Anspruch 7, **dadurch gekennzeichnet, dass** die zumindest eine Aktoreinheit (12a; 12b) dazu vorgesehen ist, anhand der Laufzeit (34a; 34b) des zumindest einen Elektromotors (14a; 14b) eine Position des zumindest einen Sicht- und/oder Sonnenschutzes und/oder des zumindest einen Fensters zu bestimmen.

9. System mit zumindest einem Sicht- und/oder Sonnenschutz und/oder mit zumindest einem Fenster, zumindest einem Elektromotor (14a; 14b), welcher zu einem Heben und/oder Senken des zumindest einen Sicht- und/oder Sonnenschutzes und/oder zu einem Öffnen und/oder Schließen des zumindest einen Fensters vorgesehen ist, und zumindest einer Steuervorrichtung (10a; 10b) nach einem der vorhergehenden Ansprüche.

10. Verfahren zum Betrieb einer Steuervorrichtung (10a; 10b) für zumindest einen Sicht- und/oder Sonnenschutz und/oder für zumindest ein Fenster, insbesondere nach einem der Ansprüche 1 bis 8, mit zumindest einer Aktoreinheit (12a; 12b) zur Ansteuerung zumindest eines Elektromotors (14a; 14b), welcher zu einem Heben und/oder Senken des zumindest einen Sicht- und/oder Sonnenschutzes und/oder zu einem Öffnen und/oder Schließen des zumindest einen Fensters vorgesehen ist, wobei eine Anlauftotzeit (16a; 16b) des zumindest einen Elektromotors (14a, 14b) unter Verwendung von Änderungen eines Motorstroms (28a; 28b) des Elektromotors (14a, 14b) automatisch bestimmt wird.

## Claims

1. Control device for at least one sight protection and/or sun protection and/or for at least one window, with at least one actor unit (12a; 12b) for actuating at least one electromotor (14a; 14b) which is provided for lifting and/or lowering the at least one sight protection and/or sun protection and/or for opening and/or closing the at least one window, **characterised in that,** for an operation of the control device, the at least one actor unit (12a; 12b) is configured for automatically determining a start-up dead time (16a; 16b) of the at least one electromotor (14a; 14b) using variations of a motor current (28a; 28b) of the electromotor (14a; 14b).

2. Control device according to claim 1, **characterised in that** the at least one actor unit (12a; 12b) is configured for detecting a start (18a; 18b) and/or an end (20a; 20b) of the start-up dead time (16a; 16b).

3. Control device according to one of the preceding claims, **characterised in that** the at least one actor unit (12a; 12b) is configured for determining a duration (22a; 22b) of the start-up dead time (16a; 16b).

4. Control device according to one of the preceding claims, **characterised in that** the at least one actor unit (12a; 12b) comprises a sensor unit (24a; 24b), which is configured for capturing in at least one operating state a progression (26a; 26b) of a motor current (28a; 28b) of the at least one electromotor (14a; 14b).

5. Control device according to claim 4, **characterised in that** the at least one actor unit (12a; 12b) is configured for determining the duration (22a; 22b) of the start-up dead time (16a; 16b) and/or the start (18a; 18b) and/or the end (20a; 20b) of the start-up dead time (16a; 16b) by at least one variation within the progression (26a; 26b) of the motor current (28a; 28b).

6. Control device according to one of the preceding claims, **characterised in that** the at least one actor unit (12a; 12b) is configured for capturing a time interval (32a; 32b) between a triggering of a movement command for the at least one electromotor (14a; 14b) and an at least substantially full implementation of the movement command by the at least one electromotor (14a; 14b).

7. Control device according to claim 6, **characterised in that** the at least one actor unit (12a; 12b) is configured for determining an operating time (34a; 34b) of the at least one electromotor (14a; 14b) on the basis of the time interval (32a; 32b) and the start-up dead time (16a; 16b) of the at least one electromotor (14a; 14b).

8. Control device according to claim 7, **characterised in that** the at least one actor unit (12a; 12b) is configured for determining a position of the at least one sight protection and/or sun protection and/or of the at least one window on the basis of the operating time (34a; 34b) of the at least one electromotor (14a; 14b).

9. System with at least one sight protection and/or sun protection and/or with at least one window, with at least one electromotor (14a; 14b), which is configured for lifting and/or lowering the at least one sight protection and/or sun protection and/or for opening and/or closing of the at least one window, and with at least one control device (10a; 10b) according to one of the preceding claims.

10. Method for operating a control device (10a; 10b) for at least one sight protection and/or sun protection and/or for at least one window, in particular according to one of claims 1 to 8, with at least one actor unit (12a; 12b) for actuating at least one electromotor (14a; 14b) which is configured for lifting and/or lowering the at least one sight protection and/or sun protection and/or for opening and/or closing the at least one window, wherein a start-up dead time (16a; 16b) of the at least one electromotor (14a; 14b) is automatically determined using variations of a motor current (28a; 28b) of the electromotor (14a; 14b).

## Revendications

1. Dispositif de commande pour au moins un pare-vue et/ou pare-soleil et/ou pour au moins une fenêtre, avec au moins une unité actionneur (12a ; 12b) pour l'actionnement d'au moins un moteur électrique (14a ; 14b), lequel est prévu pour le levage et/ou l'abaissement de l'au moins un pare-vue et/ou pare-soleil et/ou pour l'ouverture et/ou fermeture de l'au moins une fenêtre, **caractérisé en ce que** pour une opération du dispositif de commande l'au moins une unité actionneur (12a ; 12b) soit prévue pour déterminer automatiquement un temps mort de démarrage (16a ; 16 b) de l'au moins un moteur électrique utilisant des variations du courant moteur (28a ; 28b) du moteur électrique (14a ; 14b).

2. Dispositif de commande selon la revendication 1, **caractérisé en ce que** l'au moins une unité actionneur (12a ; 12b) soit prévue pour détecter un début (18a ; 18b) et/ou une fin (20a ; 20b) du temps mort de démarrage (16a ; 16b).

3. Dispositif de commande selon l'une quelconque des revendications précédentes, **caractérisé en ce que** l'au moins une unité actionneur (12a ; 12b) soit prévue pour déterminer une durée (22a ; 22b) du temps mort de démarrage (16a ; 16b).

4. Dispositif de commande selon l'une quelconque des revendications précédentes, **caractérisé en ce que** l'au moins une unité actionneur (12a ; 12b) comprenne une unité capteur prévue pour saisir dans au moins un état d'opération le déroulement (26a ; 26b) d'un courant moteur (28a ; 28b) de l'au moins un moteur électrique (14a ; 14b).

5. Dispositif de commande selon la revendication 4, **caractérisé en ce que** l'unité actionneur (12a ; 12b) soit prévue pour déterminer une durée (22a ; 22b) du temps mort de démarrage (16a ; 16b) et/ou le début (18a ; 18b) et/ou la fin (20a ; 20b) du temps mort de démarrage (16a ; 16b) par le biais de l'au moins une variation au sein du déroulement (26a ; 26b) du courant moteur (28a ; 28b).

6. Dispositif de commande selon l'une quelconque des revendications précédentes, **caractérisé en ce que** l'au moins une unité actionneur (12a ; 12b) soit prévue pour saisir un laps de temps (32a ; 32b) entre le déclenchement d'une commande de mise en marche à l'au moins un moteur électrique (14a ; 14b) et une exécution au moins sensiblement complète de la commande de mise en marche par l'au moins un moteur électrique (14a ; 14b).

7. Dispositif de commande selon la revendication 6, **caractérisé en ce que** l'au moins une unité actionneur (12a ; 12b) soit prévue pour déterminer, au moyen du laps de temps (32a ; 32b) et du temps mort de démarrage (16a ; 16b) de l'au moins un moteur électrique (14a ; 14b), une durée de marche (34a ; 34b) de l'au moins un moteur électrique (14a ; 14b).

8. Dispositif de commande selon la revendication 7, **caractérisé en ce que** l'au moins une unité actionneur (12a ; 12b) soit prévue pour déterminer, au moyen de la durée de marche (34a ; 34b) de l'au moins un moteur électrique (14a ; 14b), une position de l'au moins un pare-vue et/ou pare-soleil et/ou de l'au moins une fenêtre.

9. Système avec au moins un pare-vue et/ou pare-soleil et/ou avec au moins une fenêtre, avec au moins un moteur électrique, lequel est prévu pour le levage et/ou l'abaissement de l'au moins un pare-vue et/ou pare-soleil et/ou pour l'ouverture et/ou pour la fermeture de l'au moins une fenêtre, et avec au moins un dispositif de commande (10a ; 10b) selon l'une quelconque des revendications précédentes.

10. Procédé pour l'opération d'un dispositif de commande (10a ; 10b) pour au moins un pare-vue et/ou pare-soleil et/ou pour au moins une fenêtre, en particulier selon l'une quelconque des revendications 1 à 8, avec au moins une unité actionneur (12a ; 12b) pour l'actionnement de l'au moins un moteur électrique (14a ; 14b), lequel est prévu pour un levage et/ou abaissement de l'au moins un pare-vue et/ou pare-soleil et/ou pour l'ouverture et/ou fermeture de l'au moins une fenêtre, un temps mort de démarrage (16a ; 16b) de l'au moins un moteur électrique étant déterminé automatiquement utilisant de variations d'un courant moteur (28a ; 28b) du moteur électrique (14a ; 14b).
